# EUROPÄISCHE PATENTSCHRIFT

(11) **EP 2 862 609 B1**
(45) Veröffentlichungstag und Bekanntmachung des Hinweises auf die Patenterteilung: **12.06.2019**
(21) Anmeldenummer: 14179550.0
(22) Anmeldetag: 01.08.2014
(51) Int. Cl.: B01D 35/22, B01D 29/88, B01D 29/90

(54) **Fluidfilter für ein Kraftfahrzeug**
Fluid filter for a motor vehicle
Filtre à fluide pour un véhicule automobile

(30) Priorität: 10.09.2013 DE 102013218027
(43) Veröffentlichungstag der Anmeldung: 22.04.2015
(73) Patentinhaber: MAHLE International GmbH, 70376 Stuttgart (DE)
(72) Erfinder: Schadler, Werner, 8430 Seggauberg (AT)
(74) Vertreter: BRP Renaud & Partner mbB Rechtsanwälte Patentanwälte Steuerberater

(56) Entgegenhaltungen:
- FR-A1- 2 640 161
- US-A- 5 180 490
- US-A- 5 830 371
- US-A1- 2002 134 725
- US-A1- 2003 132 151
- US-A1- 2010 219 117
- US-A1- 2013 193 058

## Beschreibung

Die Erfindung betrifft ein Fluidfilter für ein Kraftfahrzeug sowie ein Kraftfahrzeug mit wenigstens einem solchen Fluidfilter.

Unter dem Begriff "Fluidfilter" sind in der Fahrzeugtechnik Vorrichtungen jedweder Art gefasst, welche zum Aussondern von Feststoffen aus einem Gas- oder Flüssigkeitsstrom dienen. Dem einschlägigen Fachmann sind verschiedene konstruktive Ausgestaltungsformen solcher Fluidfilter bekannt: so kommen im Fahrzeugbau solche Fluidfilter in Form von Luftfilter zum Einsatz, um die von einer Brennkraftmaschine angesaugte Luft vor der Einleitung in die Brennkammer von Schmutzpartikeln zu säubern. Entsprechend sind zur Filtrierung des in die Brennkammer einzuspritzenden Kraftstoffs Kraftstofffilter verschiedenster Bauart bekannt. Schließlich finden besagte Fluidfilter auch als Ölfilter Verwendung.

Besonders beliebt zum Einbau in einem Motorraum moderner Kraftfahrzeuge sind sogenannte Ringfilter, welche sich durch eine - bauraumtechnisch besonders platzsparende - geometrische Formgebung in Gestalt eines Zylinders auszeichnen. In derartigen Ringfiltern mit zylindrischem Gehäuse kann üblicherweise ein in der Art eines Hohlzylinders ausgebildetes, siebartiges Filterelement eingesetzt werden, welches einen Gehäuseinnenraum des Gehäuses in eine Roh- und eine Reinseite unterteilt. Die Einleitung des zu filternden Fluids erfolgt mit Hilfe einer im Gehäuse vorgesehenen und mit der Rohseite des Gehäuseinnenraums fluidisch kommunizierenden Einlassöffnung. Zur Abgabe des gefilterten Fluids aus dem Fluidfilter wird die Reinseite des Gehäuseinnenraums entsprechend mit einer geeigneten Auslassöffnung versehen.

Von entscheidender Bedeutung für eine möglichst wirksame Filterung ist nun eine möglichst gleichmäßige Reduzierung der Geschwindigkeit der einzelnen Fluidmoleküle bei gleichzeitig möglichst geringem Druckverlust, bevor die Fluidmoleküle in die Rohseite eintreten und auf das Filterelement treffen.

Der Stand der Technik verfolgt im Falle der US 7,232,035 den Ansatz, in der Rohseite des Fluidfilters eine Mehrzahl von flossenartig geformten Ablenkelementen vorzusehen, auf welche der in das Filtergehäuse eingebrachte Fluidstrom trifft. Die Ablenkelemente sind derart geformt, dass der sich geradlinig ausbreitende Fluidstrom auf eine spiralförmige Bahn abgelenkt wird. Die dabei auftretenden Zentrifugalkräfte sorgen dafür, dass Schmutzpartikel radial außen gleichmäßig an der Innenseite der Gehäusewand abgesondert werden. Die US 2003/132151 A1 zeigt einen Fluidfilter mit radial abgewinkelten Leitungen zum Verteilen des Öls auf der Rohseite der Filters.

Die vorliegende Erfindung stellt sich nun die Aufgabe, ein strömungsoptimiertes Fluidfilter zu schaffen sowie ein Kraftfahrzeug mit wenigstens einem solchen Fluidfilter bereitzustellen.

Diese Aufgaben werden durch den Gegenstand der unabhängigen Patentansprüche gelöst. Bevorzugte Ausführungsformen sind Gegenstand der unabhängigen Patentansprüche.

Grundgedanke der Erfindung ist demnach, das Fluidfilter mit einer Diffusoranordnung mit einer Fluidhauptleitung und wenigstens einer von der Fluidhauptleitung abzweigenden Diffusorleitung zu versehen. Experimentelle Untersuchungen in Verbindung mit entsprechenden Simulationsrechnungen haben gezeigt, dass der erfindungsgemäße Aufbau der Diffusoranordnung mit einer sich in Umfangsrichtung erstreckenden Fluidhauptleitung und mit radial nach außen von dieser wegführender Diffusorleitung eine auf die Fluidmoleküle geschwindigkeitsreduzierende Wirkung entfaltet, bei welcher also die Geschwindigkeit der einzelnen Fluidmoleküle im Mittel herabgesetzt wird, ohne dass damit eine - sich beim Einsatz des Fluidfilters im Kraftfahrzeug, etwa als Luft- oder Kraftstofffilter, als nachteilig erweisende - starke Reduzierung des Fluiddrucks einhergeht. Die erfindungsgemäße Diffusoranordnung gestattet also einen verlustarmen Aufbau von Druckenergie aus der kinetischen Energie der in den Diffusor eingebrachten Fluidmoleküle.

Die hier vorgestellte Diffusoranordnung umfasst zur Erzielung oben beschriebener Effekte eine sich wenigstens abschnittsweise entlang der Umfangsrichtung des zylindrischen Filtergehäuses erstreckende Fluidhauptleitung. Die Fluidhauptleitung steht wiederum mittels wenigstens einer sich jeweils radial nach außen von der Fluidhauptleitung weg erstreckender und mit der Rohseite kommunizierender Diffusorleitung mit der Rohseite in Fluidverbindung.

Eine derartige Konfiguration der Diffusoranordnung mit einer sich in Umfangsrichtung des Filtergehäuses erstreckenden Fluidhauptleitung ermöglicht es neben oben beschriebener Geschwindigkeitsreduzierung der Fluidmoleküle, das eingeleitete Fluid in bezüglich der Umfangsrichtung verschiedene Sektoren des Gehäuseinnenraums zu transportieren, bevor es dann direkt in die Rohseite des Gehäuseinnenraums eingeleitet wird. Dies begünstigt nicht nur die angestrebte, möglichst homogene Geschwindigkeitsreduzierung der Fluidmoleküle im Gehäuseinnenraum, bereits bevor sie zur eigentlichen Filtrierung auf das Filterelement des Fluidfilters treffen, sondern zusätzlich auch eine räumliche Gleichverteilung des Fluids in der Rohseite des Gehäuseinnenraums.

Die Leitungshöhe der Diffusorleitung entlang der axialen Richtung des Filtergehäuses ist kleiner als eine Leitungshöhe der Fluidhauptleitung, so dass die Diffusorleitung eine Diffusordüse ausbildet.

Gemäß einer bevorzugten Ausgestaltungsvariante umfasst die Diffusoranordnung wenigstens zwei Diffusorleitungen, wodurch eine räumliche Gleichverteilung des die Diffusoranordnung verlassenden Fluids in der Rohseite des Gehäuseinnenraums begünstigt wird. Die Gleichverteilung des Fluids bei der Einleitung in den Gehäuseinnenraum lässt sich dabei zusätzlich verbessern, indem jede Diffusorleitung mit einer im Querschnitt des Fluidfilters im Wesentlichen radial nach außen weisende Auslassöffnung versehen wird, durch welche das die jeweilige Diffusorleitung durchströmende Fluid in die Rohseite des Gehäuseinnenraums eintreten kann. Die beiden Auslassöffnungen sind dabei in Umfangsrichtung des Filtergehäuses zueinander im Abstand und unter einem Winkel von wenigstens 10°, vorzugsweise von wenigstens 15°, höchst vorzugsweise von wenigstens 20°, zueinander angeordnet. Diese konstruktive Maßnahme hat zur Folge, dass auch das aus der wenigstens eine Auslassöffnung austretende Fluid unter dem besagten Winkel in die Rohseite eintritt, was eine gleichmäßige Verteilung des Fluids in Umfangsrichtung des Filtergehäuses fördert.

Als fertigungstechnisch besonders einfach zu realisieren erweist sich eine Ausführungsform, bei welcher sich die Fluidzuführungsleitung, welche den zentralen Fluideinlass des Fluidfilters mit der erfindungsgemäßen Fluidhauptleitung verbindet, entlang einer radialen Richtung des Filtergehäuses erstreckt.

Eine ausgeprägte und somit für den bevorstehenden Filterungsprozess besonders günstige Durchmischung des Fluids, bevor dieses mittels der Diffusorleitung auf die verschiedenen Sektoren des Filterelements verteilt wird, lässt sich erzielen, indem die Fluidhauptleitung derart ausgelegt wird, dass ihr Strömungsquerschnitt von der Fluidzuführungsleitung weg abnimmt. Die Fluidhauptleitung folgt somit dem Wirkprinzip einer Düse, wodurch eine durch Turbulenzen im Fluidstrom hervorgerufene Abnahme des Fluiddrucks teilweise wieder ausgeglichen werden kann.

Um übermäßige unerwünschte Reflektionen der Fluidmoleküle an den Leitungswänden der Diffusorleitung möglichst gering zu halten, empfiehlt es sich gemäß einer vorteilhaften Weiterbildung, die wenigstens eine Diffusorleitung im Querschnitt des Fluidfilters gekrümmt auszubilden. Idealerweise werden die Diffusorleitungen über ihren gesamten Erstreckungsbereich hinweg mit einer solchen Krümmung versehen, die entlang der Diffusorleitung konstant sein oder aber variieren kann. Sollte es der konstruktive Aufbau des Fluidfilters erforderlich machen, kann sich besagte gekrümmte geometrische Formgebung der Diffusorleitungen auf einen oder mehrere Abschnitte der gesamten Diffusorleitung beschränken.

Durch die wenigstens eine Diffusorleitungen wird das zu filternde Fluid auf verschiedene Sektoren der Rohseite des Gehäuseinnenraums verteilt. Um nun auch bereits im Mündungsbereich der Diffusorleitung in den Gehäuseinnenraum ein möglichst aufgeweitetes Strahlprofil zu erzeugen, empfiehlt es sich, die Diffusorleitung derart zu gestalten, dass ihr Leitungsquerschnitt im besagten Mündungsbereich zur Rohseite des Gehäuseinnenraums hin zunimmt.

Um entlang der Umfangsrichtung des Filtergehäuses verschiedene Sektoren des Gehäuseinnenraums gleichmäßig mit Fluid aus der Diffusoranordnung zu versorgen, empfiehlt es sich ferner, die Diffusoranordnung mit möglichst vielen verschiedenen, an Diffusorleitungen auszustatten. Da sich die konstruktive Komplexität des Fluidfilters mit zunehmender Anzahl solcher stetig erhöht, bietet es sich an, in der Diffusoranordnung wenigstens fünf, vorzugsweise zehn verschiedene Diffusorleitungen vorzusehen.

Bei einer besonders bevorzugten Ausgestaltungsform weist die wenigstens eine Diffusorleitung jeweils einen Leitungsquerschnitt auf, der kleiner ist als der Leitungsquerschnitt der Fluidhauptleitung. Auf diese Weise wird ein unerwünschter Druckabfall des Fluiddrucks bei der Aufteilung des Fluidstroms von der Fluidhauptleitung auf die Diffusorleitungen verhindert.

Da der im Fluidfilter zum Vorsehen der Diffusoranordnung zur Verfügung stehende Bauraum üblicherweise sehr gering ist, empfiehlt es sich, die wenigstens eine Diffusorleitung gegenüber der Fluidhauptleitung derart im Filtergehäuse anzuordnen, dass sie im Querschnitt des Filtergehäuses eine zueinander entgegengesetzte Krümmungsrichtung aufweisen. Dies gestattet es, die der Umfangsrichtung des Filtergehäuses folgende Fluidhauptleitung platzsparend, beispielsweise unmittelbar im einem Bereich um die axiale Achse des Gehäuses, anzuordnen, wobei die Diffusorleitungen mit dazu entgegengesetzter Krümmungsrichtung radial nach außen von der Fluidhauptleitung weggeführt werden.

Gemäß einer vorteilhaften Weiterbildung kann die Diffusoranordnung an geeigneter Stelle, beispielsweise im Bereich der Fluidhauptleitung oder der einzelnen Diffusorleitungen mit einer - an sich bekannten -Heizeinrichtung ergänzt werden. In Kombination mit der Diffusoranordnung gestattet die - bevorzugt elektrisch ausgebildete - Heizeinrichtung eine gleichmäßige Erwärmung des zu filternden Fluids. Denn die erfindungsgemäße Diffusoranordnung stellt sicher, dass die verschiedenen Heizelemente einer solchen Heizeinrichtung einer gleichmäßigen, im Wesentlichen parallelen Anströmung durch das Fluid ausgesetzt sind.

Die vorangehend vorgestellte, erfindungsgemäße Diffusoranordnung ist zum Einbau an verschiedenen Stellen eines herkömmlichen Filtergehäuses, welches typischerweise einen Gehäusetopf und einen Gehäusedeckel umfasst, geeignet. Bevorzugt wird die Diffusoranordnung im Bodenbereich des Gehäusetopfs oder, alternativ dazu, im Gehäusedeckel vorgesehen.

Als fertigungstechnisch besonders einfach zu realisieren erweist sich eine Ausführungsform, bei welcher die oben beschriebene Diffusoranordnung ein separates Bauteil ist, welches zunächst separat hergestellt und anschließend im Filtergehäuse des Fluidfilters verbaut wird. Alternativ dazu eröffnet sich dem Fachmann jedoch auch die Möglichkeit, die Fertigung der Diffusoranordnung direkt in den Herstellungsprozess des Fluidfilters zu integrieren und die Diffusoranordnung integral am Gehäusedeckel bzw. am Gehäuseboden auszuformen.

Gemäß einer besonders einfach und somit kostengünstigen Ausführungsform weist die Diffusoranordnung ein Diffusormaterial aus einem Kunststoff auf und wird bei der Montage des Fluidfilters ist an den Gehäusedeckel bzw. Gehäusetopf angeschraubt.

Die Erfindung betrifft weiterhin ein Kraftfahrzeug mit wenigstens einem Fluidfilter mit einem oder mehreren der vorangehend erläuterten Merkmale.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: ein Beispiel eines erfindungsgemäßen Fluidfilters in einem Querschnitt,
- Fig. 2: einen Gehäusedeckel des Fluidfilters mit der erfindungsgemäßen Diffusoranordnung in einer perspektivischen Ansicht,
- Fig. 3: die Diffusoranordnung des Fluidfilters in einem Längsschnitt.

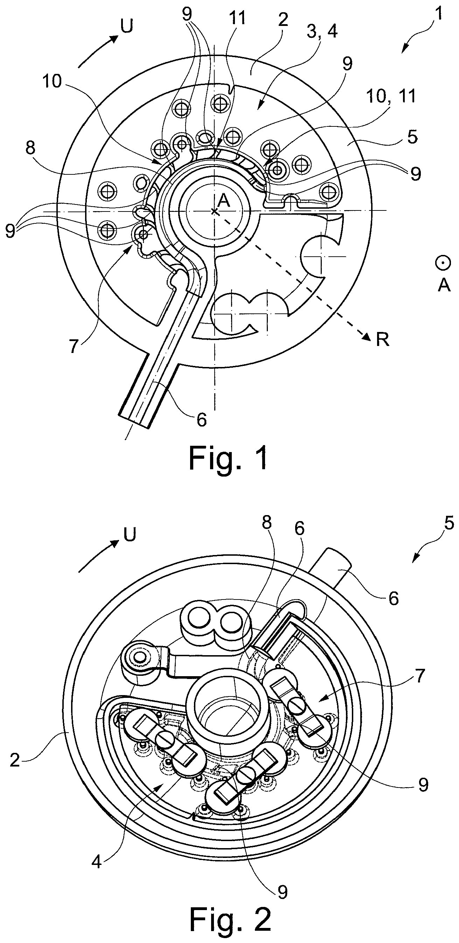

Figur 1 illustriert ein Beispiel für ein Fluidfilter 1, wie es beispielsweise als Luft-, Öl- oder Kraftstofffilter in einem Kraftfahrzeug Verwendung finden kann, in einem Querschnitt. Das Fluidfilter 1 besitzt ein ausreichend groß dimensioniertes Filtergehäuse 2 mit einem Gehäusetopf und einem Gehäusedeckel 5 und mit im Wesentlichen zylindrischer Formgebung, in dessen Gehäuseinnenraum 3 ein Filterelement angeordnet ist, welches eine Rohseite 4 von einer Reinseite trennt. Die Figur 1 zeigt den Querschnitt des Fluidfilters 1 im Bereich des Gehäusedeckels 5, welcher in Figur 2 als separates Bauteil - also ohne Gehäusetopf - in einer perspektivischen Darstellung abgebildet ist. Die Diffusoranordnung 7 weist dabei ein Diffusormaterial aus einem Kunststoff auf.

Das Fluidfilter umfasst genau eine am Filtergehäuse 2 vorgesehenen Fluidzuführungsleitung 6, welche mittels der Diffusoranordnung 3 fluidisch mit der in den Figuren 1 und 2 gezeigten Rohseite 4 des Gehäuseinnenraums 3 kommuniziert. Als technisch besonders einfach zu realisieren erweist sich eine Fluidzuführungsleitung 6, welche sich entlang einer radialen Richtung R des zylindrischen Filtergehäuses 2 erstreckt. Die Diffusoranordnung 3 ist zum Einbau an verschiedenen Stellen des Filtergehäuses 2, welches typischerweise einen Gehäusetopf und einen Gehäusedeckel umfassen kann, geeignet. Bevorzugt kann die Diffusoranordnung 7 wie in Figur 2 gezeigt im Gehäusedeckel 5 oder, alternativ dazu, im Bodenbereich des Gehäusetopfs (nicht gezeigt) vorgesehen sein.

Die Diffusoranordnung 7 umfasst nunmehr eine sich entlang der Umfangsrichtung U des Filtergehäuses 2 erstreckende Fluidhauptleitung 8, welche mittels einer Mehrzahl sich radial nach außen, also von der Fluidhauptleitung 8 weg, erstreckender Diffusorleitungen 9 mit der Rohseite 4 des Gehäuseinnenraums 3 in Fluidverbindung steht. Im Beispielszenario der Figur 1 sind neun solcher Diffusorleitungen 9 gezeigt. Es ist klar, dass alternativ dazu auch eine andere Anzahl an solchen Leitungen 9 vorstellbar ist. Bevorzugt, weil hochwirksam und dennoch konstruktiv einfach zu verwirklichen, sind indes Ausgestaltungsformen mit wenigstens fünf, vorzugsweise mit zehn Diffusorleitungen 9. Unabhängig davon kann daran gedacht sein, anstelle nur einer einzigen Fluidhauptleitung 8 mehrere Leitungen vorzusehen. Die Diffusoranordnung 7 gestattet eine gleichmäßige Absenkung der Geschwindigkeit der einzelnen Fluidmoleküle, ohne dass es dabei zu einem starken, unerwünschten Druckabfall des Fluiddrucks kommt.

Jede Diffusorleitung 9 besitzt eine im Querschnitt des Fluidfilters (vgl. Fig. 1) im Wesentlichen radial nach außen weisende Auslassöffnung 10, durch welche das die jeweilige Diffusorleitung 9 durchströmende Fluid in die Rohseite 4 des Gehäuseinnenraums 3 eintreten kann. Der Querschnitt der einzelnen Diffusorleitungen 9 kann dabei entlang der Fluidhauptleitung 8 von der Fluidzuführungsleitung 6 weg zunehmen, d.h. die in Strömungsrichtung erste von der Fluidhauptleitung 8 abzweigende Diffusorleitung weist einen geringeren Strömungsquerschnitt als die in Strömungsrichtung letzte, also im Beispielszenario der Figur 1 neunte Diffusorleitung 9 auf. Die Auslassöffnungen 10 sind dabei in Umfangsrichtung U des Filtergehäuses 2 zueinander im Abstand und unter einem Winkel von wenigstens 10°, vorzugsweise von wenigstens 15°, höchst vorzugsweise von wenigstens 20° zueinander angeordnet. Diese konstruktive Maßnahme bewirkt einen gleichmäßigen Austritt von Fluid aus der Fluidhauptleitung 8 über die Diffusorleitungen 9 in die Rohseite 4 entlang der Umfangsrichtung U. Die neun Diffusorleitungen 9 weisen jeweils einen Leitungsquerschnitt auf, welcher kleiner ist als der Leitungsquerschnitt der Fluidhauptleitung 8. Auf diese Weise wird ein störender, starker Druckabfall des Fluiddrucks bei der Aufteilung des Fluidstroms von der Fluidhauptleitung 8 auf die diversen Diffusorleitungen 9 verhindert. Der Strömungsquerschnitt der Fluidhauptleitung 8 selbst nimmt im gezeigten Beispiel von der Fluidzuführungsleitung weg ab. Die Fluidhauptleitung 8 folgt somit dem Wirkprinzip einer Düse. Durch die neun Diffusorleitungen 9 wird das zu filternde Fluid auf die verschiedenen lateralen Sektoren der Rohseite 4 des Gehäuseinnenraums 3 verteilt. Um nun im Mündungsbereich 11 der Diffusorleitung 8 in den Gehäuseinnenraum 4 ein vorteilhaftes, aufgeweitetes Strahlprofil zu erzeugen, empfiehlt es sich, die Diffusorleitungen 9 derart zu gestalten, dass ihr Leitungsquerschnitt im besagten Mündungsbereich 11 zur Rohseite 4 des Gehäuseinnenraums 3 hin zunimmt.

Auf diese Weise können unerwünschte Impulsverluste der einzelnen Fluidmoleküle durch Dissipation aufgrund von Reflektionen der Fluidmoleküle an den Leitungswänden der Diffusorleitungen 9 weitgehend verhindert werden.

Der Darstellung der Figur 1 entnimmt man, dass die neun Diffusorleitungen 9 im Querschnitt des Fluidfilters 1 jeweils nicht geradlinig, sondern gekrümmt ausgebildet sind und zwar bevorzugt - wie im Beispiel der Figur 1 gezeigt - über ihren gesamten Erstreckungsbereich hinweg, wobei die Leitungskrümmung abschnittsweise variieren, aber auch konstant sein kann.

Um den zur erfindungsgemäßen Verwirklichung der Diffusoranordnung 7 erforderlichen Bauraum möglichst klein zu halten, verlaufen die Diffusorleitungen 7 im Querschnitt des Filtergehäuses 2 im Vergleich zur Fluidhauptleitung 8 mit umgekehrter Krümmung. Dies gestattet es, die im Wesentlichen der Umfangsrichtung U des Filtergehäuses 2 folgende Fluidhauptleitung 8 platzsparend, beispielsweise unmittelbar im einem Bereich um die axiale Achse des Filtergehäuses 2 herum anzuordnen, wobei die Diffusorleitung mit dazu entgegengesetzter Krümmungsrichtung radial nach außen von der Fluidhauptleitung 8 weggeführt werden.

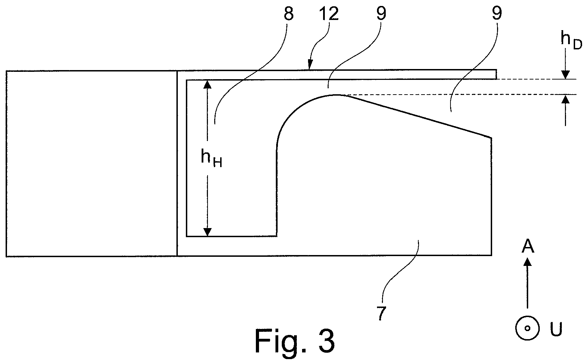

Figur 3 zeigt die Diffusoranordnung 7 in einem Längsschnitt des Fluidfilters 1. Die Leitungshöhe h_{D} der Diffusorleitung 9 entlang der axialen Richtung A des Filtergehäuses 2 ist kleiner als eine Leitungshöhe h_{H} der Fluidhauptleitung 8, so dass die Diffusorleitung eine Diffusordüse ausbildet. Insbesondere kann die Diffusorleitung 9 zur Erzielung einer Düsenwirkung wie in Figur 3 gezeigt im Längsschnitt des Fluidfilters 1 eine mit dem Bezugszeichen 12 bezeichnete Verjüngung aufweisen.

## Patentansprüche

1. Fluidfilter (1), insbesondere für ein Kraftfahrzeug,
- mit einem im Wesentlichen zylindrischen Filtergehäuse (2), in dessen Gehäuseinnenraum (3) ein Filterelement angeordnet ist, welches eine Rohseite (4) von einer Reinseite trennt,
- mit genau einer am Filtergehäuse (2) vorgesehenen Fluidzuführungsleitung (6), welche mittels einer Diffusoranordnung (7) fluidisch mit der Rohseite (4) kommuniziert,
- wobei die Diffusoranordnung (7) eine sich wenigstens abschnittsweise entlang der Umfangsrichtung (U) des zylindrischen Filtergehäuses (2) erstreckende Fluidhauptleitung (8) umfasst, welche mittels wenigstens einer sich jeweils radial nach außen von der Fluidhauptleitung (8) weg erstreckender Diffusorleitungen (9) mit der Rohseite des Gehäuseinnenraums (4) in Fluidverbindung steht,
**dadurch gekennzeichnet, dass**
eine Leitungshöhe (h_{D}) der Diffusorleitung (9) entlang der axialen Richtung (A) des Filtergehäuses (2) kleiner ist als eine Leitungshöhe (h_{H}) der Fluidhauptleitung (8), so dass die Diffusorleitung eine Diffusordüse ausbildet.

2. Fluidfilter nach Anspruch 1,
**dadurch gekennzeichnet, dass**
- wenigstens zwei Diffusorleitungen (9) vorgesehen sind,
- jede Diffusorleitung (9) im Querschnitt des Fluidfilters (1) eine im Wesentlichen radial nach außen weisende Auslassöffnung (10) aufweist, wobei die wenigstens zwei Auslassöffnungen (10) in Umfangsrichtung (U) des Filtergehäuses (2) zueinander im Abstand und unter einem Winkel von wenigstens 10°, vorzugsweise von wenigstens 15°, höchst vorzugsweise von wenigstens 20°, zueinander angeordnet sind.

3. Fluidfilter nach Anspruch 1 und 2,
**dadurch gekennzeichnet, dass**
sich die Fluidzuführungsleitung (6) entlang einer radialen Richtung (R) des Filtergehäuses (2) erstreckt.

4. Fluidfilter nach einem der vorhergehenden Ansprüche,
**dadurch gekennzeichnet, dass**
ein Strömungsquerschnitt der Fluidhauptleitung (8) von der Fluidzuführungsleitung (6) weg abnimmt.

5. Fluidfilter nach einem der vorhergehenden Ansprüche,
**dadurch gekennzeichnet, dass**
die wenigstens zwei Diffusorleitungen (9) in einem Querschnitt des Filtergehäuses (2) wenigstens abschnittsweise, vorzugsweise über ihren gesamten Erstreckungsbereich hinweg, gekrümmt ausgebildet sind.

6. Fluidfilter nach einem der vorhergehenden Ansprüche,
**dadurch gekennzeichnet, dass**
jede Diffusorleitung (9) einen in die Rohseite (4) mündenden Mündungsbereich (11) aufweist, entlang dessen der Leitungsquerschnitt der Diffusorleitung (9) zur Rohseite (4) hin zunimmt.

7. Fluidfilter nach einem der vorhergehenden Ansprüche,
**dadurch gekennzeichnet, dass**
wenigstens fünf, vorzugsweise zehn, Diffusorleitungen (9) vorgesehen sind.

8. Fluidfilter nach einem der vorhergehenden Ansprüche,
**dadurch gekennzeichnet, dass**
die wenigstens zwei Diffusorleitungen (9) jeweils einen Leitungsquerschnitt aufweisen, der kleiner ist als ein Leitungsquerschnitt der Fluidhauptleitung (8).

9. Fluidfilter nach einem der vorhergehenden Ansprüche,
**dadurch gekennzeichnet, dass**
die wenigstens zwei Diffusorleitungen (9) und die Fluidhauptleitung (8) bezüglich des Querschnitts des Filtergehäuses (2) zueinander entgegengesetzte Krümmungsrichtungen aufweisen.

10. Fluidfilter nach einem der vorhergehenden Ansprüche,
**dadurch gekennzeichnet, dass**
die Diffusoranordnung (7) eine Heizvorrichtung zum Einstellen einer Temperatur des die Diffusoranordnung (7) durchströmenden Fluids aufweist.

11. Fluidfilter nach einem der vorhergehenden Ansprüche,
**dadurch gekennzeichnet, dass**
- das Filtergehäuse (7) einen Gehäusetopf und einen Gehäusedeckel (5) umfasst,
- die Diffusoranordnung im Bodenbereich des Gehäusetopfs oder im Gehäusedeckel (5) vorgesehen ist.

12. Fluidfilter nach einem der vorhergehenden Ansprüche,
**dadurch gekennzeichnet, dass**
- die Diffusoranordnung (7) ein separates Bauteil ist, oder dass
- die Diffusoranordnung (7) integral am Gehäusedeckel (5) oder am Gehäusetopf ausgeformt ist.

13. Fluidfilter nach einem der vorhergehenden Ansprüche,
**dadurch gekennzeichnet, dass**
die Diffusoranordnung (7) ein Diffusormaterial aus einem Kunststoff aufweist und an den Gehäusedeckel (5) oder an den Gehäusetopf angeschraubt ist.

14. Kraftfahrzeug mit wenigstens einem Fluidfilter (1) nach einem der vorhergehenden Ansprüche.

## Claims

1. Fluid filter (1), in particular for a motor vehicle
- having a substantially cylindrical filter housing (2), in the housing interior (3) of which a filter element is arranged, which separates a dirty side (4) from a clean side,
- having exactly one fluid supply line (6) provided on the filter housing (2), which fluidically communicates with the dirty side (4) by means of a diffuser arrangement (7),
- wherein the diffuser arrangement (7) comprises a main fluid line (8) extending, at least in sections, along the circumferential direction (U) of the cylindrical filter housing (2), which is in fluid connection with the dirty side of the housing interior (4) via at least one diffuser line (9) extending radially outwards from the main fluid line (8),
**characterised in that**
a line height (h_{D}) of the diffuser line (9) along the axial direction (A) of the filter housing (2) is less than a line height (h_{H}) of the main fluid line (8), so that the diffuser line forms a diffuser nozzle.

2. Fluid filter according to claim 1,
**characterised in that**
- at least two diffuser lines (9) are provided,
- each diffuser line (9) has an outlet opening (10) pointing substantially radially outwards in the cross-section of the fluid filter (1), wherein the at least two outlet openings (10) are arranged at a distance to each other in circumferential direction (U) of the filter housing (2) and at an angle of at least 10°, preferably at least 15°, most preferably at least 20°.

3. Fluid filter according to claim 1 and 2,
**characterised in that**
the fluid supply line (6) extends along a radial direction (R) of the filter housing (2).

4. Fluid filter according to any one of the preceding claims,
**characterised in that**
a flow cross-section of the main fluid line (8) decreases away from the fluid supply line (6).

5. Fluid filter according to any one of the preceding claims,
**characterised in that**
the at least two diffuser lines (9) are formed curved in a cross-section of the filter housing (2), at least in sections, preferably over their entire extent.

6. Fluid filter according to any one of the preceding claims,
**characterised in that**
each diffuser line (9) has an opening region (11) opening into the dirty side (4), along which the line cross-section of the diffuser line (9) increases towards the dirty side (4).

7. Fluid filter according to any one of the preceding claims,
**characterised in that**
at least five, preferably ten, diffuser lines (9) are provided.

8. Fluid filter according to any one of the preceding claims,
**characterised in that**
the at least two diffuser lines (9) each have a line cross-section that is less than a line cross-section of the main fluid line (8).

9. Fluid filter according to any one of the preceding claims,
**characterised in that**
the at least two diffuser lines (9) and the main fluid line (8) have mutually opposite directions of curvature with respect to the cross-section of the filter housing (2).

10. Fluid filter according to any one of the preceding claims,
**characterised in that**
the diffuser arrangement (7) has a heating device for setting a temperature of the fluid flowing through the diffuser arrangement (7).

11. Fluid filter according to any one of the preceding claims,
**characterised in that**
- the filter housing (7) comprises a housing jar and a housing cover (5),
- the diffuser arrangement is provided in the bottom region of the housing jar or in the housing cover (5).

12. Fluid filter according to any one of the preceding claims,
**characterised in that**
- the diffuser arrangement (7) is a separate component, or **in that**
- the diffuser arrangement (7) is integrally formed on the housing cover (5) or on the housing jar.

13. Fluid filter according to any one of the preceding claims,
**characterised in that**
the diffuser arrangement (7) has a diffuser material made of plastic and is screwed on the housing cover (5) or on the housing jar.

14. Motor vehicle comprising at least one fluid filter (1) according to any one of the preceding claims.

## Revendications

1. Filtre à fluide (1), en particulier destiné à un véhicule automobile,
- avec un boîtier de filtre (2) essentiellement cylindrique, au sein de l'espace intérieur de boîtier (3) duquel est agencé un élément filtrant qui sépare un côté produit brut (4) d'un côté produit pur,
- avec exactement une conduite d'alimentation de fluide (6) prévue au niveau du boîtier de filtre (2) et communiquant de manière fluidique avec le côté produit brut (4) au moyen d'un ensemble diffuseur (7),
- dans lequel l'ensemble diffuseur (7) comprend une conduite principale de fluide (8) s'étendant au moins par sections le long de la direction périphérique (U) du boîtier de filtre (2) cylindrique, qui se trouve en communication fluidique avec le côté produit brut de l'espace intérieur de boîtier (4) au moyen d'au moins une conduite de diffusion (9) s'étendant respectivement de manière radiale vers l'extérieur en s'éloignant de la conduite principale de fluide (8),
**caractérisé en ce que**
une hauteur de conduite (h_{D}) de la conduite de diffusion (9) le long de la direction axiale (A) du boîtier de filtre (2) est inférieure à une hauteur de conduite (h_{H}) de la conduite principale de fluide (8), de sorte que la conduite de diffusion forme une buse de diffusion.

2. Filtre à fluide selon la revendication 1,
**caractérisé en ce que**
- au moins deux conduites de diffusion (9) sont prévues,
- chaque conduite de diffusion (9) présente, en section transversale du filtre à fluide (1), une ouverture de sortie (10) orientée vers l'extérieur de manière essentiellement radiale, dans lequel les au moins deux ouvertures de sortie (10) sont agencées dans la direction périphérique (U) du boîtier de filtre (2) avec un intervalle les séparant et avec un angle d'au moins 10°, de préférences d'au moins 15°, de la manière la plus préférée d'au moins 20°, les unes par rapport aux autres.

3. Filtre à fluide selon les revendications 1 et 2,
**caractérisé en ce que**
la conduite d'alimentation de fluide (6) s'étend le long d'une direction radiale (R) du boîtier de filtre (2).

4. Filtre à fluide selon l'une quelconque des revendications précédentes,
**caractérisé en ce que**
une section d'écoulement de la conduite principale de fluide (8) diminue en s'éloignant de la conduite d'alimentation de fluide (6).

5. Filtre à fluide selon l'une quelconque des revendications précédentes,
**caractérisé en ce que**
les au moins deux conduites de diffusion (9) sont réalisées de manière courbe au moins par sections, de préférence sur l'ensemble de leur région d'extension, dans une section transversale du boîtier de filtre (2).

6. Filtre à fluide selon l'une quelconque des revendications précédentes,
**caractérisé en ce que**
chaque conduite de diffusion (9) présente une région d'ouverture (11) débouchant du côté produit brut (4) et le long de laquelle la section transversale de conduite de la conduite de diffuseur (9) augmente en allant vers le côté produit brut (4).

7. Filtre à fluide selon l'une quelconque des revendications précédentes,
**caractérisé en ce que**
au moins cinq, de préférence dix, conduites de diffusion (9) sont prévues.

8. Filtre à fluide selon l'une quelconque des revendications précédentes,
**caractérisé en ce que**
les au moins deux conduites de diffusion (9) présentent respectivement une section transversale de conduite qui est inférieure à la section transversale de conduite de la conduite principale de fluide (8).

9. Filtre à fluide selon l'une quelconque des revendications précédentes,
**caractérisé en ce que**
les au moins deux conduites de diffusion (9) et la conduite principale de fluide (8) présentent des directions de courbure opposées par rapport à la section transversale du boîtier de filtre (2).

10. Filtre à fluide selon l'une quelconque des revendications précédentes,
**caractérisé en ce que**
l'ensemble diffuseur (7) présente un dispositif de chauffage destiné à l'ajustement d'une température du fluide parcourant l'ensemble diffuseur (7).

11. Filtre à fluide selon l'une quelconque des revendications précédentes,
**caractérisé en ce que**
- le boîtier de filtre (7) comprend un pot de logement et un couvercle de boîtier (5),
- l'ensemble diffuseur est prévu dans la zone de fond du pot de logement ou dans le couvercle de boîtier (5).

12. Filtre à fluide selon l'une quelconque des revendications précédentes,
**caractérisé en ce que**
- l'ensemble diffuseur (7) est un composant séparé, ou **en ce que**
- l'ensemble diffuseur (7) est formé d'un seul tenant au niveau du couvercle de boîtier (5) ou du pot de logement.

13. Filtre à fluide selon l'une quelconque des revendications précédentes,
**caractérisé en ce que**
l'ensemble diffuseur (7) présente un matériau de diffusion en matière plastique et est vissé sur le couvercle de boîtier (5) ou sur le pot de logement.

14. Véhicule automobile avec au moins un filtre à fluide (1) selon l'une quelconque des revendications précédentes.
